# EUROPEAN PATENT SPECIFICATION

(11) **EP 3 827 943 B1**
(45) Date of publication and mention of the grant of the patent: **04.03.2026**
(21) Application number: 19000535.5
(22) Date of filing: 27.11.2019
(51) Int. Cl.: B26D 3/08, B26D 7/20

(54) **A CONTAINER FORMING MACHINE COMPRISING A PRE-CUTTING SYSTEM**
EINE BEHÄLTERFORMMASCHINE MIT VORSCHNEIDESYSTEM
MACHINE DE FORMATION DE RÉCIPIENTS COMPRENANT UN SYSTÈME DE PRÉDÉCOUPE

(43) Date of publication of application: 02.06.2021
(60) Divisional application: 25185881.7
(73) Proprietor: Industrias Tecnológicas de Mecanización y Automatizaciòn, S.A., 08960 Sant Just Desvern (Barcelona) (ES)
(72) Inventor: González, Manuel, 08960 Sant Just Desvern (Barcelona) (ES)
(74) Representative: Lozano Alonso, Jose

(56) References cited:
- EP-A1- 1 598 276
- EP-A1- 1 649 989
- EP-A1- 3 566 832
- EP-B1- 1 649 989
- WO-A1-2019/171242
- DE-A1- 10 208 997

## Description

A die plate that comprises lower blades facing the upper blades, so that when the punch plate closes on the die plate, the upper blades and the lower blades simultaneously define upper and lower pre-cutting lines on opposite faces of the multilayer material of the containers, thereby guaranteeing a proper tear of the multilayer material along said pre-cutting lines.

This solution is effective for making the upper and lower pre-cuts at the same time; however, depending on the mechanical characteristics of the materials that make up the different layers of the multilayer material, this simultaneity of the upper and lower pre-cuts, which are very close to one another, can cause stress in the multilayer material, by which neither the upper nor the lower pre-cuts are cut, leading to undesirable tears of the multilayer material in said area, either prior to or during the separation of the containers.

WO 2019/171242 A1 also belongs to the background art concerning the present invention and discloses an incision station for making a plurality of weaknesses respectively on a plurality of portions of a web, for producing a plurality of packages each of which comprising a supporting sheet corresponding to a respective portion of the portions and an opening system corresponding to the weakness made on the respective portion, which makes it possible to increase the precision in obtaining the opening system of each package and to increase the productivity of the packaging machine in which the above-mentioned station operates. WO 2019/171242 A1 also relates to a packaging machine which comprises said incision station and an incision method for making the above-mentioned plurality of weaknesses. From EP 3 566 832 A1 a container pre-cutting device is known.

### Description of the invention

The present invention discloses a container forming machine comprising a pre-cutting system according to claim 1. Preferred embodiments are object of the dependent claims.

The container pre-cutting system of this invention is applicable to multilayer and/or single-layer container forming machines, which cause intermittent advances in the multilayer and/or monolayer material with a length according to an advance step of the machine; and has suitable technical features for making a lower pre-cut and an upper pre-cut in the facing areas of the lower and upper surfaces in two phases, meaning successively, not simultaneously, making both the lower and upper pre-cuts in an advance of the multilayer and/or single-layer material of a predetermined length, thereby eliminating the stresses produced in the multilayer and/or single-layer material by making the simultaneous upper and lower pre-cuts.

Therefore, this system is especially ideal for pre-cutting multipack containers made of different materials (PET, PP, PLA and PS).

To this end, and according to the invention, this container pre-cutting system comprises a lower pre-cutting device and an upper pre-cutting device, provided with respective lower and upper blades, having relative vertical movement with respect to the multilayer and/or single-layer material; and wherein said lower and upper pre-cutting devices are separated in the advance direction of the multilayer and/or single-layer material by a length equal to a multiple of the advance step of the container forming machine.

This movement of the multilayer and/or single-layer material between the lower and upper pre-cutting devices makes it so between the upper and lower pre-cuts, the multilayer and/or single-layer material releases the stress produced during the first pre-cut, preventing the stresses from accumulating during the second pre-cut that is very close to the prior pre-cut.

According to the invention, the lower pre-cutting device comprises: a vertically movable lower die, holding the lower blade; and an upper floating stop, mounted on calibrated springs on a punch plate and against which the multilayer and/or single-layer material is moved by the lower die, during the lower pre-cutting of said multilayer and/or single-layer material.

Furthermore, the upper pre-cutting device comprises: a lower die and an upper blade mounted with the possibility of relative vertical movement with respect to a floating stop in turn provided with limited vertical movement with respect to a punch plate; said upper blade being mounted on calibrated springs.

According to one embodiment of the invention the upper and lower pre-cutting devices are defined in a double tool able to be actuated by the same press of the forming machine, which can be a current form, fill and seal machine, for example, also known as FFS machines.

Optionally, the upper and lower pre-cutting devices are defined on independent tools, installed on different presses.

In both cases the upper and lower pre-cutting devices are separated from one another by a length corresponding to several advance steps of the machine.

Lastly, it is worth mentioning that the order of the upper and lower pre-cutting devices in relation to the advance direction of the multilayer and/or single-layer material is not important, the system being able to first make the lower pre-cut and then the upper pre-cut, or vice versa, given that it does not affect the essence of the invention.

### Brief description of the content of the drawings

As a complement to the description being made, and for the purpose of helping to make the features of the invention more readily understandable, this specification is accompanied by a set of drawings which, by way of illustration and not limitation, represent the following.
- Figure 1 shows a schematic elevation view of an exemplary embodiment of the container pre-cutting system according to the invention, wherein the lower pre-cutting device and the upper pre-cutting device can be seen longitudinally separated in the advance direction of containers formed in a sheet of multilayer and/or single-layer material.
- Figure 2 shows an elevation view of the lower pre-cutting device, wherein the lower blade is fixed to the lower die; and a detailed enlargement of the pre-cutting area of the same.
- Figure 3 shows a detailed enlargement of an embodiment variant of the lower pre-cutting device, wherein the lower blade is machined in the lower die itself.
- Figure 4 shows an elevation view of the upper pre-cutting device and a detailed enlargement of the pre-cutting area of the same.
- Figures 5, 6 and 7 schematically show different mounting embodiments of the upper and lower pre-cutting devices with respect to a form, fill and seal machine (FFS machine).

### Detailed description of embodiments of the invention

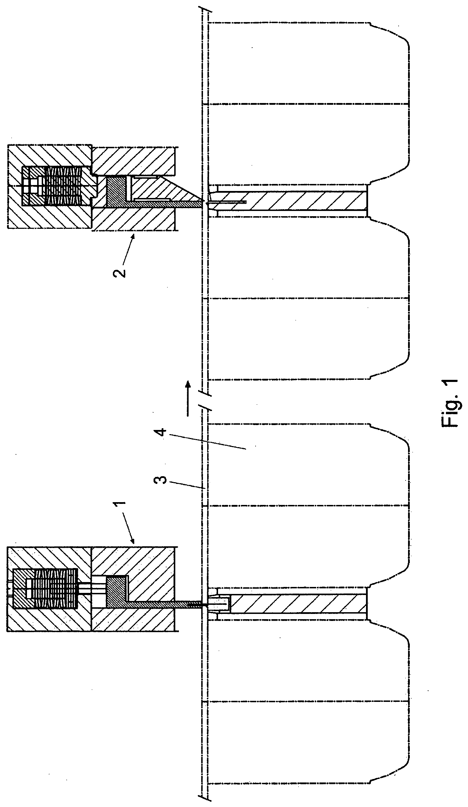

In figure 1 the container pre-cutting system comprises a lower pre-cutting device (1) and an upper pre-cutting device (2) intended to be mounted on a container forming machine (4), made with multilayer and/or single-layer material (3) and which, when actuated, make both pre-cuts in the lower surface and in the upper surface of the multilayer material (3).

It must be mentioned that in the aforementioned figure 1, the lower pre-cutting device (1) and the upper pre-cutting device (2) are in this order in the advance direction of the multilayer and/or single-layer material (3), although it could be in the opposite order, since the order does not affect the operation of the system.

The lower pre-cut device (1) and upper pre-cut device (2) are longitudinally separated in the advance direction of the multilayer material (3) by a length equal to a multiple of the advance step of the container forming machine, such that the lower and upper pre-cutting lines corresponding to the same area of multilayer and/or single-layer material (3) are not made simultaneously, but rather in two successive phases.

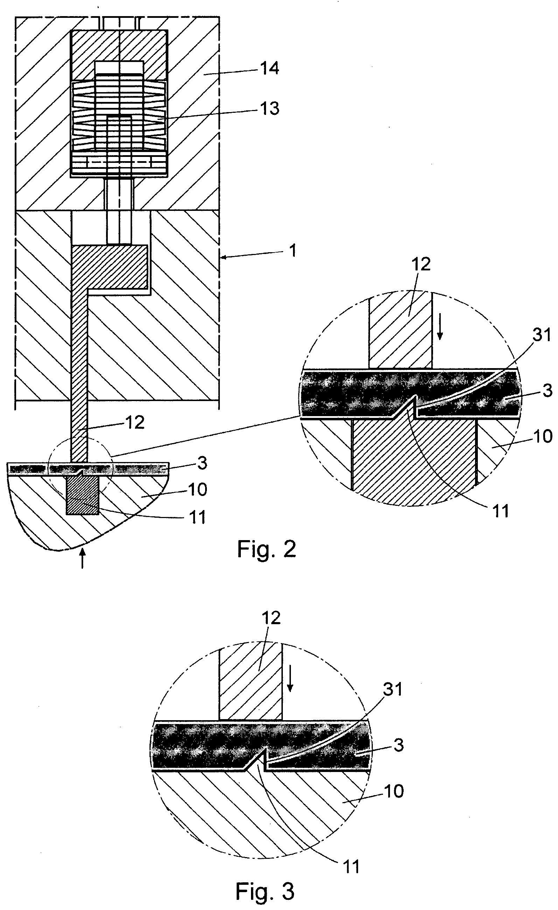

In the exemplary embodiment shown in figure 2, the lower pre-cutting device (1) comprises: a lower die (10), able to move vertically, to which a lower blade (11) is fixed; and an upper floating stop (12) mounted on calibrated springs (13) on a punch plate (14).

When the lower die (10) moves towards the upper area, as shown in figure 2, it pushes the multilayer material (3) against the upper floating stop (12), the lower blade (11) making a lower pre-cut (31) in the multilayer and/or single-layer material (3).

It is worth mentioning that the lower blade (11) can be fixed to the lower die (10) as shown in figure 2, or be directly machined on said lower die (10) as shown in the detail of figure 3.

To make a pre-cut facing the aforementioned lower pre-cut (31) in the upper surface of the multilayer and/or single-layer material (3), it is necessary for the multilayer and/or single-layer material to move a specific number of advance steps of the machine, until said area reaches the upper pre-cutting device (2).

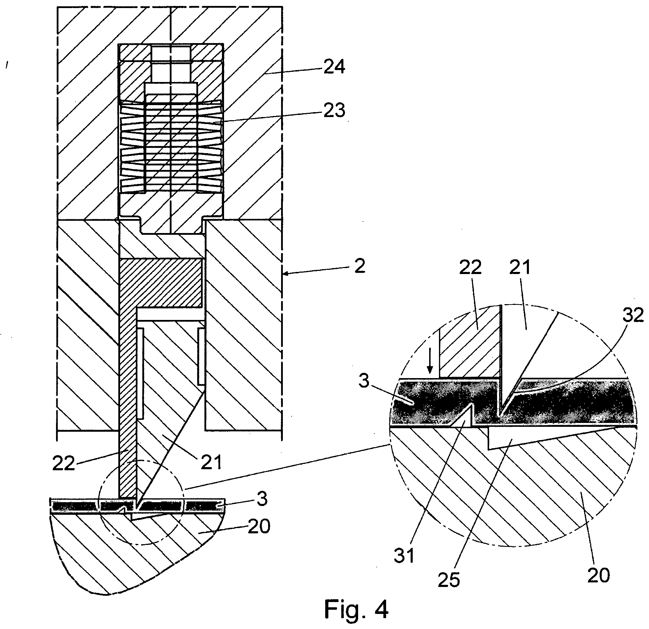

The upper pre-cutting device (2) shown in figure 4 comprises: a lower die (20) and an upper blade (21) mounted with the possibility of relative vertical movement with respect to a floating stop (22) in turn provided with limited vertical movement with respect to a punch plate (23); said upper blade (20) being mounted on calibrated springs (24).

When the upper pre-cutting device (2) is actuated, the floating stop (22) presses the multilayer and/or single-layer material (3) against the lower die (20) and the upper blade (21) penetrates the upper surface of the multilayer material (3), defining the upper pre-cut (32) in the same.

As can be seen in the detailed enlargement of figure 4, the lower pre-cut (31) and the upper pre-cut (32) are slightly separated in the advance direction of the multilayer material (3), the lower die (20) in the area facing the upper blade (21) having a recess (25) that allows for a certain elastic deformation of the multilayer sheet (3) when making the upper pre-cut (32), which contributes to reducing the stresses of the material in the pre-cutting area.

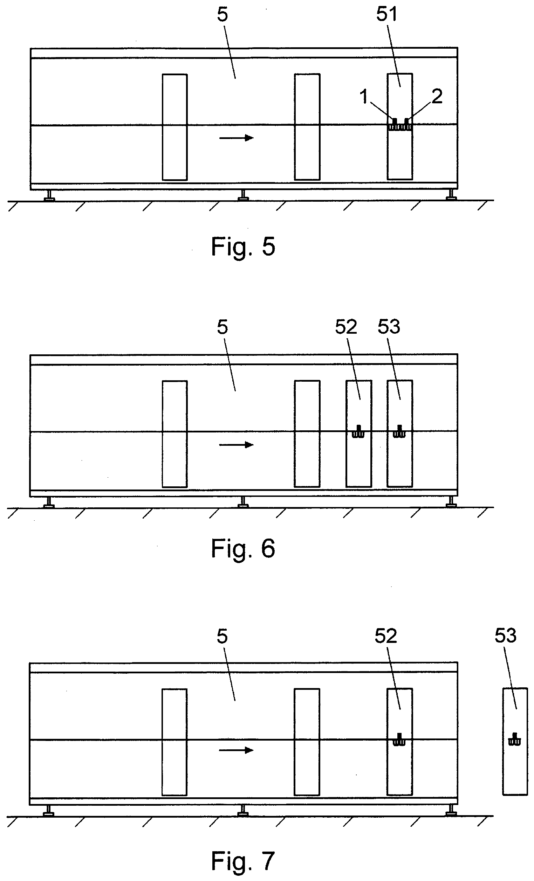

The lower pre-cutting device (1) and the upper pre-cutting device (2) can be defined in a double tool (51) able to be actuated by the same press of the forming machine (5), as schematically shown in figure 5; or in two independent tools (52, 53) installed on different presses, situated either in the forming machine (5), as shown in figure 6, or one in the forming machine and another outside the same, as shown in figure 7.

In any case, the separation between the lower pre-cutting device (1) and the upper pre-cutting device (2) is a multiple of the advance step of the forming machine (5) so that the lower pre-cut (31) and the upper pre-cut (32) are in facing positions, as shown in figure 4.

Having sufficiently described the nature of the invention, in addition to an example of preferred embodiment, it is hereby stated for the relevant purposes that the materials, shape, size and layout of the described elements may be modified, provided that it does not imply altering the essential characteristics of the invention claimed below.

## Claims

1. A container forming machine comprising a pre-cutting system that use intermittent advances of multilayer and/or single-layer material of a length according to an advance step of the container forming machine; said pre-cutting system being suitable for making a lower pre-cut (32) on the lower surface and an upper pre-cut (32) on the upper surface of multilayer and/or single-layer material (3), **characterized in that** it comprises a lower pre-cutting device (1) and an upper pre-cutting device (2), provided with respective lower blades (11) and upper blades (21) having relative vertical movement with respect to the multilayer and/or single-layer material (3); and wherein said lower pre-cutting device (1) and upper pre-cutting device (2) are separated in the advance direction of the multilayer and/or single-layer material (3) by a length that is a multiple of the advance step of the container forming machine so that the lower-precut (31) and the upper pre-cut (32) are in facing positions.

2. The container forming machine according to claim 1, **characterized in that** the lower pre-cutting device (1) comprises: a vertically movable lower die (10), to which the lower blade (11) is fixed, or defined; and an upper floating stop (12), mounted on springs calibrated (13) on a punch plate (14) and against which the multilayer and/or single-layer material (3) is moved by the lower die (10), during the lower pre-cutting of said multilayer material (3).

3. The container forming machine according to claim 1, **characterized in that** the upper pre-cutting device (2) comprises: a lower die (20) and an upper blade (21) mounted with the possibility of relative vertical movement with respect to a floating stop (22) in turn provided with limited vertical movement with respect to a punch plate (23); said upper blade (21) being mounted on calibrated springs (24).

4. The container forming machine according to any one of claims 1 to 3, **characterized in that** the lower pre-cutting device (1) and the upper pre-cutting device (2) are defined on a double tool (51) able to be actuated by the same press of the container forming machine (5).

5. The container forming machine according to any one of claims 1 to 3, **characterized in that** the lower pre-cutting device (1) and the upper pre-cutting device (2) are defined on independent tools (52, 53), installed on different presses and separated from one another by a multiple length of the advance step of the forming machine (5).

## Patentansprüche

1. Behälterformungsmaschine, die ein Vorschneidesystem umfasst, das intermittierende Vorschübe von mehrlagigem und/oder einlagigem Material mit einer Länge gemäß einem Vorschubschritt der Behälterformungsmaschine verwendet; wobei das Vorschneidesystem geeignet ist, um einen unteren Vorschnitt (32) auf der unteren Oberfläche und einen oberen Vorschnitt (32) auf der oberen Oberfläche von mehrlagigem und/oder einlagigem Material (3) vorzunehmen, **dadurch gekennzeichnet, dass** es eine untere Vorschneidevorrichtung (1) und eine obere Vorschneidevorrichtung (2) umfasst, die mit jeweiligen unteren Klingen (11) und oberen Klingen (21) bereitgestellt sind, die eine relative vertikale Bewegung in Bezug auf das mehrlagige und/oder einlagige Material (3) aufweisen; und wobei die untere Vorschneidevorrichtung (1) und die obere Vorschneidevorrichtung (2) in der Vorschubrichtung des mehrlagigen und/oder einlagigen Materials (3) um eine Länge getrennt sind, die ein Vielfaches des Vorschubschritts der Behälterformungsmaschine ist, sodass der untere Vorschnitt (31) und der obere Vorschnitt (32) in gegenüberliegenden Positionen erfolgen.

2. Behälterformmaschine nach Anspruch 1, **dadurch gekennzeichnet, dass** die untere Vorschneidevorrichtung (1) umfasst: eine vertikal bewegliche untere Matrize (10), an der die untere Klinge (11) befestigt oder definiert ist; und einen oberen schwimmenden Anschlag (12), der an Federn montiert ist, die auf einer Stempelplatte (14) kalibriert (13) sind und gegen die das mehrlagige und/oder einlagige Material (3) durch die untere Matrize (10) während des unteren Vorschneidens des mehrlagigen Materials (3) bewegt wird.

3. Behälterformmaschine nach Anspruch 1, **dadurch gekennzeichnet, dass** die obere Vorschneidevorrichtung (2) umfasst: eine untere Matrize (20) und eine obere Klinge (21), die mit der Möglichkeit einer relativen vertikalen Bewegung in Bezug auf einen schwimmenden Anschlag (22) montiert ist, der seinerseits mit einer begrenzten vertikalen Bewegung in Bezug auf eine Stempelplatte (23) bereitgestellt ist; wobei die obere Klinge (21) an kalibrierten Federn (24) montiert ist.

4. Behälterformmaschine nach einem der Ansprüche 1 bis 3, **dadurch gekennzeichnet, dass** die untere Vorschneidevorrichtung (1) und die obere Vorschneidevorrichtung (2) an einem Doppelwerkzeug (51) definiert sind, das in der Lage ist, durch dieselbe Presse der Behälterformmaschine (5) betätigt zu werden.

5. Behälterformungsmaschine nach einem der Ansprüche 1 bis 3, **dadurch gekennzeichnet, dass** die untere Vorschneidevorrichtung (1) und die obere Vorschneidevorrichtung (2) an unabhängigen Werkzeugen (52, 53) definiert sind, die an unterschiedlichen Pressen installiert und durch eine mehrfache Länge des Vorschubschritts der Formungsmaschine (5) voneinander getrennt sind.

## Revendications

1. Machine à former des récipients comprenant un système de prédécoupage qui utilise des avances intermittentes de matériau multicouche et/ou monocouche d'une longueur selon une étape d'avance de la machine à former des récipients ; ledit système de prédécoupage étant approprié pour réaliser une prédécoupe inférieure (32) sur la surface inférieure et une prédécoupe supérieure (32) sur la surface supérieure du matériau multicouche et/ou monocouche (3), **caractérisée en ce qu'**elle comprend un dispositif de prédécoupage inférieur (1) et un dispositif de prédécoupage supérieur (2), pourvus de lames inférieures (11) et de lames supérieures (21) respectives ayant un mouvement vertical relatif par rapport au matériau multicouche et/ou monocouche (3) ; et dans laquelle ledit dispositif de prédécoupage inférieur (1) et ledit dispositif de prédécoupage supérieur (2) sont séparés dans la direction d'avance du matériau multicouche et/ou monocouche (3) par une longueur qui est un multiple du pas d'avance de la machine à former des récipients, de sorte que la prédécoupe inférieure (31) et la prédécoupe supérieure (32) sont dans des positions se faisant face.

2. Machine à former des récipients selon la revendication 1, **caractérisée en ce que** le dispositif de prédécoupage inférieur (1) comprend : un emporte-pièce inférieur (10) mobile verticalement, sur lequel la lame inférieure (11) est fixée, ou définie ; et une butée flottante supérieure (12), montée sur des ressorts calibrés (13) sur une plaque de poinçonnage (14) et contre laquelle le matériau multicouche et/ou monocouche (3) est entraîné en mouvement par l'emporte-pièce inférieur (10), pendant le prédécoupage inférieur dudit matériau multicouche (3).

3. Machine à former des récipients selon la revendication 1, **caractérisée en ce que** le dispositif de prédécoupage supérieur (2) comprend : un emporte-pièce inférieur (20) et une lame supérieure (21) montée avec la possibilité d'un mouvement vertical relatif par rapport à une butée flottante (22) à son tour pourvue d'un mouvement vertical limité par rapport à une plaque de poinçonnage (23) ; ladite lame supérieure (21) étant montée sur des ressorts calibrés (24).

4. Machine à former des récipients selon l'une quelconque des revendications 1 à 3, **caractérisée en ce que** le dispositif de prédécoupage inférieur (1) et le dispositif de prédécoupage supérieur (2) sont définis sur un double outil (51) apte à être actionné par la même presse de la machine à former des récipients (5).

5. Machine à former des récipients selon l'une quelconque des revendications 1 à 3, **caractérisée en ce que** le dispositif de prédécoupage inférieur (1) et le dispositif de prédécoupage supérieur (2) sont définis sur des outils indépendants (52, 53), installés sur des presses différentes et séparés les uns des autres par une longueur multiple du pas d'avance de la machine à former (5).
